# EUROPEAN PATENT SPECIFICATION

(11) **EP 3 305 635 B1**
(45) Date of publication and mention of the grant of the patent: **08.01.2025**
(21) Application number: 17166133.3
(22) Date of filing: 12.05.2010
(51) Int. Cl.: B62H 5/00, B62J 9/00, B62K 19/30, B62K 19/46

(54) **FRAME, CYCLE, STEERING LOCK MECHANISM, CLAMPING MECHANISM, LOCK CHAIN GUIDE AND LUGGAGE CARRIER**
RAHMEN, RING, LENKSPERRENMECHANISMUS, KLEMMMECHANISMUS, RASTKETTENFÜHRUNG UND GEPÄCKTRÄGER
CADRE, CYCLE, MÉCANISME DE VERROUILLAGE DE DIRECTION, MÉCANISME DE SERRAGE, GUIDE-CHAÎNE DE VERROUILLAGE ET PORTE-BAGAGES

(30) Priority: 12.05.2009 NL 1036941; 02.09.2009 NL 1037246
(43) Date of publication of application: 11.04.2018
(62) Divisional of application: 10740405.5
(73) Proprietor: MA Micro Limited, Surrey GU21 6JD (GB)
(72) Inventor: CARLIER, Taco Jonan, 1092 AD Amsterdam (NL); CARLIER, Ties Jonan Midas, 1092 AD Amsterdam (NL)
(74) Representative: Patentwerk B.V.

(56) References cited:
- WO-A1-2004/078566
- DE-U1- 202007 013 831
- FR-A1- 2 868 033
- US-A- 3 220 748
- US-A1- 2004 245 743
- US-B1- 6 505 846

## Description

The present invention relates to a frame. The present invention also relates to a cycle. The present invention also relates to a steering lock mechanism. The present invention also relates to a clamping mechanism. The present invention also relates to a lock chain guide. The present invention further relates to a luggage carrier. The present invention further relates to a chain lock mechanism. The present invention also relates to a steering-chain lock mechanism.

Use has been made of cycles for more than 100 years to transport people and goods. These cycles have for many years been constructed around a triangular frame with a lower tube, a seat tube or a saddle tube, and an upper tube. Such a frame imparts a strong basic construction to the cycle. A plurality of components and accessories provide the known cycle with additional functionalities. Many of such accessories are subject to wear and damage during use thereof. Such damage is a source of irritation to users of a cycle.

Document US 2004/245743 discloses a portable bicycle as a variant to the more commonly known foldable bicycle, that is provided with portability by a frame that may be separated into two parts, a front part and a rear part. This is disclosed by introducing a way to split the tube connecting the rear part of the bicycle with the front part in which this tube is made of two parts. The front part is thinner than the rear part and may slide into the rear part and subsequently fixed. As such, this document discloses a way to use the tube to make the frame modular to provide a way to make the frame compact for portability.

Document US 3 220 748 A discloses a collapsible bicycle as a splitable bicycle to achieve the advantage that both parts are individually relatively small for more flexibility in stowing such parts individually. The frame is splitable and for this, a solution for the gear and brake cable from the steer to the rear was devised by partly leading the cables through the tube from behind the tube split to behind the crank housing.

Document JP S58 181683 U discloses a head light of a motorcycle that is arranged in the front ending of the frame of the motorcycle. The shown arrangement includes a front fork, with a tube arranged through the frame of the motorcycle behind the front ending comprising the head light.

In order to obviate such drawbacks the present invention provides a frame for a bicycle according to claim 1

An advantage of a frame according to the present invention is that, by applying the accessory tube and arranging at least one sub-system therein, the respective sub-system is no longer required as separate accessory for the functionality of the cycle. A solution is hereby provided for the known problems in a durable and reliable manner.

In a further preferred embodiment a clamping mechanism is arranged in the accessory tube for the purpose of fixedly clamping a saddle pin. An advantage of such a preferred embodiment is that, using an identical frame size, the saddle can be set lower compared to a prior art cycle, since a seat tube part protruding above the upper tube is no longer necessary for clamping the saddle pin thereon. According to the prior art the saddle pin is always clamped fixedly by a clamping mechanism on the upper end of the saddle tube. By applying the clamping mechanism according to the present invention the clamping mechanism is arranged in the accessory tube, and thereby hidden from sight. A further advantage is that an upward protruding seat tube is no longer necessary. An improvement in the design of the cycle is hereby obtained in addition to the technical improvement.

The clamping mechanism preferably comprises a central connecting body with clamping arms protruding from the central connecting body. A clamping mechanism is hereby provided in easily manufactured and robust manner which can be placed inside the accessory tube.

In a further preferred embodiment a steering lock mechanism is arranged in the accessory tube. An advantage of a steering lock mechanism arranged in the accessory tube is that a cycle can be provided with a steering lock in a robust manner. In addition, such a steering lock mechanism is very simple to operate, whereby locking of the cycle is simplified, the threshold to do so is reduced and the security of the cycle is therefore increased.

In a further preferred embodiment a lock chain guide for a lock chain is arranged in the accessory tube. By means of such a lock chain guide use can be made of a lock chain which is arranged in the frame. The use of a lock chain is hereby greatly simplified in daily use since the user will always find the lock chain at a fixed position. The convenience of use of a lock chain arranged in the frame is also very great in respect of removal and re-placing after use. This also reduces the threshold for locking the cycle, and thereby increases the security of the cycle.

In a further preferred embodiment the accessory tube is a substantially thicker tube than other tubes of the frame, and at least one other tube of the frame extends at an angle through the accessory tube. An advantage of such an accessory tube configuration is that the throughfed tube can be fixedly welded in reliable manner. This embodiment provides the further advantage that the accessory tube can protrude at the front and/or rear of the frame, whereby it can be applied as mounting location for lighting elements. Lighting elements arranged in the accessory tube have the significant advantage that they are almost indestructible, since only the front part is visible and accessible. The supply of energy can also be realized wholly from the interior of the frame. It is possible to apply a battery with high power for this purpose. It is further possible to have the lighting provided with energy by integrated solar cells.

In a further preferred embodiment the accessory tube forms the upper tube and preferably extends substantially in horizontal direction from substantially the front side of the frame to substantially the rear side of the frame, being connected here to at least a head tube and a saddle tube, wherein the accessory tube extends to a position in front of the head tube and/or behind the saddle tube. This embodiment also provides the advantages stated in respect of the previous embodiment.

The front lighting and/or the rear lighting is more preferably arranged in the accessory tube, preferably in the respective end surfaces thereof.

In order to provide a further advantage in respect of locking the cycle, the frame preferably comprises a chain guide tube for guiding a lock chain from the accessory tube to the lower tube, which chain guide tube is preferably in open connection on the inside with the accessory tube and the lower tube. It hereby becomes possible to apply a chain which is fully integrated in the frame when the lock is not in use. For locking purposes the user need only pull the chain out of the frame, place it round an object and attach it for instance to a lock on the frame. The convenience of use of such a lock is much greater than that of a separate chain.

The accessory tube of the frame is preferably provided here with an opening enabling passage of the lock chain therethrough.

In a further preferred embodiment the frame comprises a chain lock mechanism for securing an end of the lock chain. Locking the cycle by means of the chain is hereby greatly simplified since the end of the chain need only be latched onto the chain lock mechanism.

The lock chain is preferably provided here with an end part which can be blocked by the chain guide. In simple manner this end part can be a ball-like element which is larger than the opening of the chain guide. The part of the chain remaining behind in the frame is hereby blocked effectively in secure manner.

In a further preferred embodiment the steering lock mechanism and the chain lock mechanism are integrated to form a steering-chain lock mechanism. Both the steering lock and the chain lock are preferably operated by means of one operating action. The convenience of operation in locking the cycle is hereby increased still further.

Preferably provided for this purpose is an operating member which can be operated from outside the accessory tube for the purpose of operating the chain lock mechanism, the steering lock mechanism and/or the steering-chain lock mechanism. Such an operating member can be a catch protruding from a slot in the accessory tube. The operating member can however also be a ring which is arranged round the accessory tube and which is operated by means of reciprocal movement. This embodiment also provides a greater convenience of use.

The accessory tube more preferably extends from the head tube to a position on the seat tube arranged between one third of the underside and the upper side. A frame is hereby provided which is similar to a classic woman's cycle frame, with similar advantages as stated in the foregoing.

For the purpose of providing energy to components or sub-systems of the cycle a power supply source such as an accumulator or battery can more preferably be arranged in the accessory tube. It hereby becomes possible in reliable manner to store and hold ready for use a relatively large amount of electrical energy. One or more of the stated lock mechanisms can for instance be operated electrically by applying for instance an electrically drivable motor. An electrical protection of these lock mechanisms also becomes possible here. Expressly envisaged here are the opening and/or closing of the locks by means of keys with electronic codes, such as chip keys or RFID code keys. Standard cylinders, which can for instance also be applied for door locks, are alternatively applied for closing purposes. This is possible because of the use of an accessory tube with a relatively large diameter.

A further aspect of the present invention relates to a cycle comprising a frame according to the present invention. Such a cycle provides similar advantages as those indicated in the foregoing.

A further aspect of the present invention relates to a steering lock mechanism, chain lock mechanism and/or steering-chain lock mechanism in accordance with the above stated respective preferred embodiments according to the present invention.

A further aspect of the present invention relates to a clamping mechanism for clamping a saddle pin suitable for arrangement in an accessory tube according to the present invention.

A further aspect of the present invention relates to a lock chain guide for use in an accessory tube according to the present invention.

A further aspect of the present invention relates to an accessory tube lighting for use in the frame according to the present invention.

A further aspect of the present invention relates to a power supply source, such as an accumulator or battery, for use in a frame according to the present invention.

A further aspect of the present invention relates to a luggage carrier for attaching to a cycle frame according to one or more of the foregoing claims, comprising:
- a holder for holding luggage,
- a fastening member for fastening the luggage carrier to the cycle frame, wherein:
- the fastening member is suitable for insertion into an accessory tube.

In a further preferred embodiment the fastening member comprises a substantially cylindrical stub. This cylindrical stab is specifically suitable for placing in an end part of the accessory tube.

Further advantages, features and details of the present invention will be elucidated in greater detail in the following description of several preferred embodiments with reference to the accompanying figures.
Fig. 1 shows a preferred embodiment in combined perspective and exploded view.

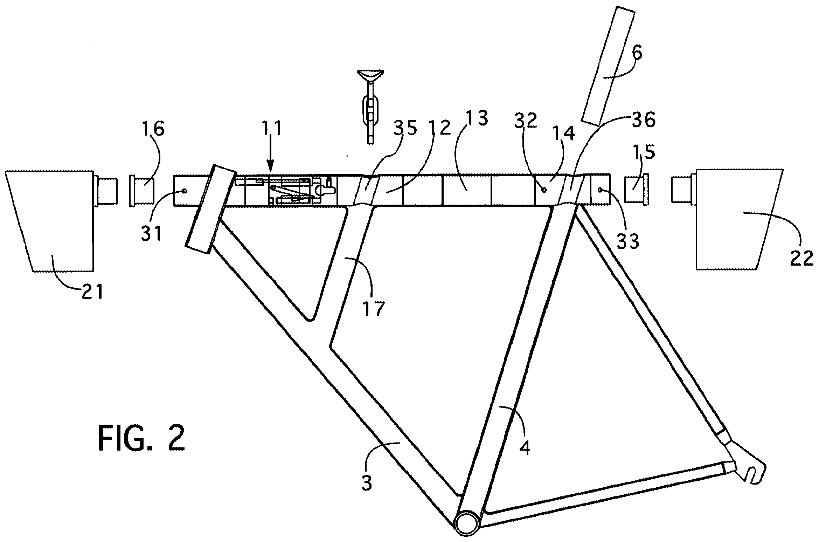

Fig. 2 shows a cut-away schematic side view of the embodiment of figure 1.
Fig. 3 shows eight schematic views of a further preferred embodiment according to the present invention.
Fig. 4 shows a further preferred embodiment in five schematic views.
Fig. 5 shows a number of cut-away views of a further preferred embodiment.
Fig. 6 shows a number of cut-away views of a further preferred embodiment.
Fig. 7 shows a number of cut-away views of a further preferred embodiment.
Fig. 8 shows a number of views of a further preferred embodiment.

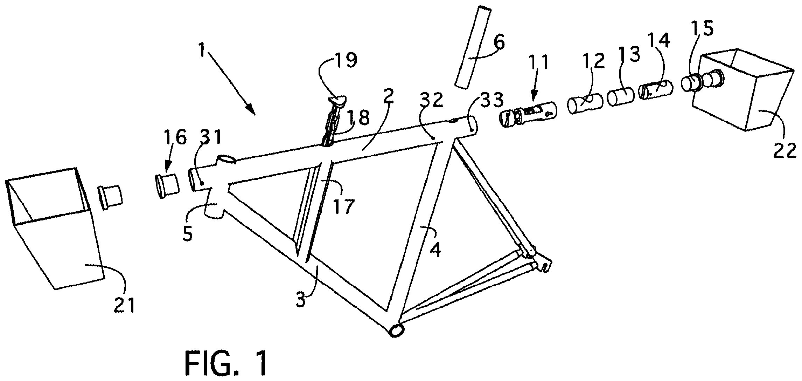

A first preferred embodiment (figure 1) is a cycle frame 1 with a number of improvements relative to the prior art. Cycle frame 1 comprises an accessory tube or upper tube 2, a lower tube 3 and a seat tube 4, in addition to a head tube 5.

A first special feature of the cycle frame according to the present invention is that the accessory tube forming the upper tube is noticeably thicker than the other tubes. A further special feature of the cycle frame according to the present invention is that the head tube extends through the accessory tube. This is possible since this head tube is considerably thinner than the accessory tube. The method of manufacture is preferably as follows. A hole is drilled obliquely through the accessory tube. The head tube is then positioned in this hole in the accessory tube. The head tube is subsequently welded fixedly in the position in which it has been placed.

Seat tube 4 is fixed by means of welding to the underside of the accessory tube. Owing to this fixing of the seat tube here on the underside of the accessory tube, the accessory tube remains open, as seen from the rear, for placing of the different components in the accessory tube. The different components can be placed separately in the accessory tube, or first be arranged in an inner tube. The advantage of an inner tube is that all components can be pushed into the accessory tube in one operation, this greatly simplifying assembly.

The accessory tube is provided on the front side with a lighting element 16 and on the rear side with a lighting element 15. These lighting elements are preferably provided with LED illumination and a power source or a temporary power storage, such as a battery or a capacitor. The lighting elements can be provided individually or be mutually connected by means of electric wires. It is further possible to provide the lighting with power by means of the battery 13, which can be placed in the accessory tube.

These lighting elements are preferably fixed by means of screw or snap means by means of opening 31. It is for instance possible to provide the lighting elements with press buttons or pins directed outward under bias. For removal from the tube the lighting elements can be pressed in, after which the lamps can slide out of the tube. A charging port, such as a USB port, is further provided for incidental recharging of said batteries. Solar cells close to the LED lamps preferably provide for trickle charging when light is available. A preferably solid moulded housing encloses each lamp element.

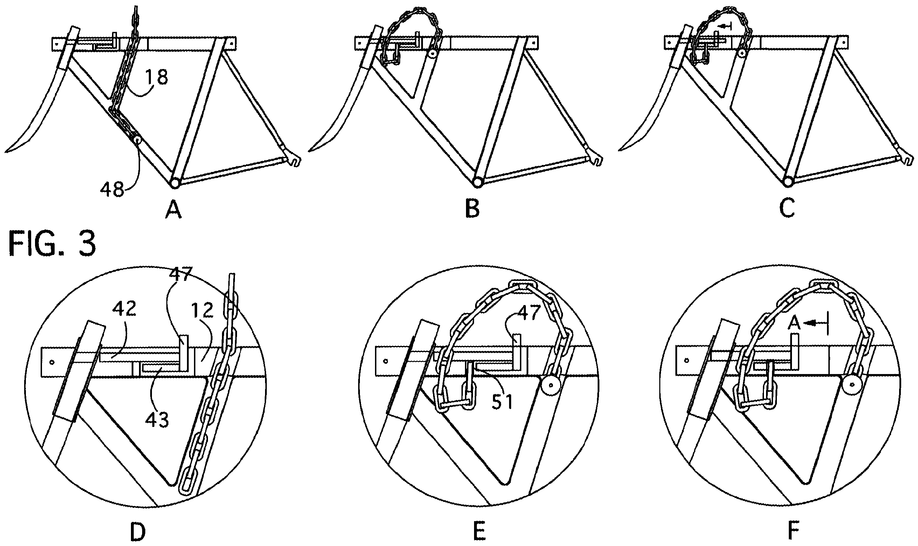

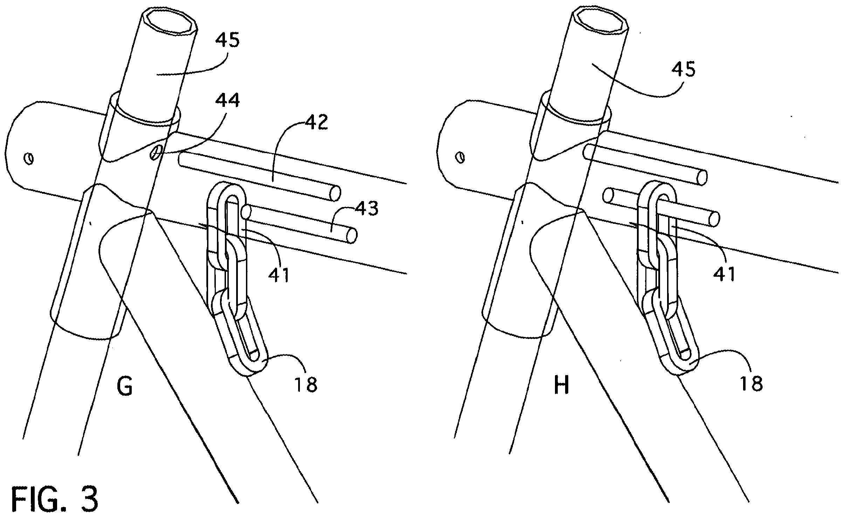

A lock unit 11 is preferably arranged on the front side of the accessory tube. This lock unit can comprise a separate steering lock, can comprise a separate chain lock, but can also comprise a combination of a steering lock and a chain lock. These components are expressly intended to be individually applicable and can also be protected individually on the basis of this patent application. A chain guide 12 is arranged behind lock unit 11. This chain guide 12 also functions as chain stop for the purpose of holding an end part of chain 18 blocked inside the frame. This is further described with reference to figure 3.

A battery 13 is preferably arranged behind chain guide 12 for providing energy to different systems of the cycle.

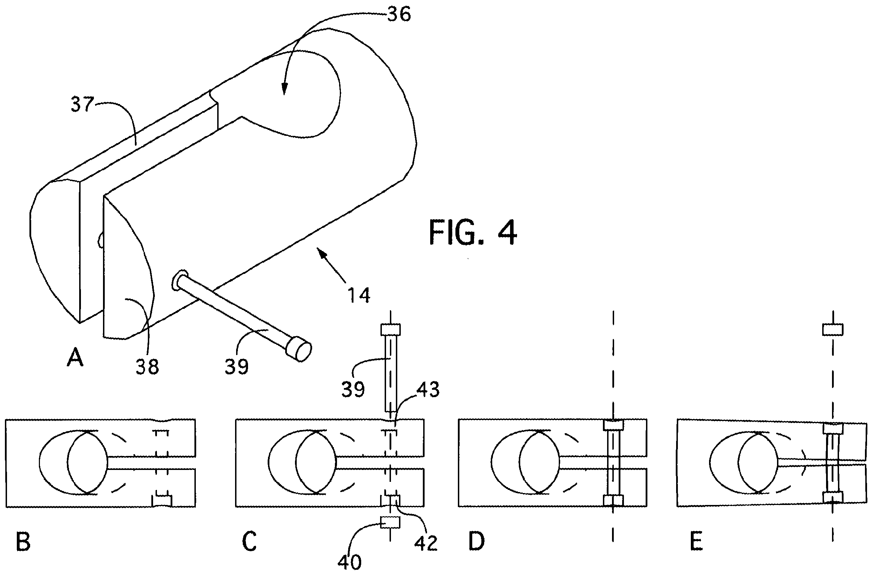

A saddle pin clamp 14 is preferably arranged behind battery 12, this being further described with reference to figure 4.

It is possible to place a luggage carrier in each of the end parts of the accessory tube instead of the lighting elements. This luggage carrier can be embodied in per se known manner as a rack, but can also be embodied as a basket or a box. For strengthening purposes the luggage carrier can be provided with a support element which supports on the head tube. Higher load-bearing capacities can hereby be achieved.

As shown in figure 3A, a chain 18 is provided which, hanging downward through chain tube 17, extends into lower tube 3. The accessory tube is provided here with a chain guide 12 which is provided with an opening through which the chain can easily be pulled out of the accessory tube, but through which it can also be easily guided back again under the influence of gravitational force. During the downward movement the ball 48 assists in pulling the chain downward. Ball 48 also functions for the purpose of holding the chain blocked under the opening of guide member 12. Owing to this arrangement according to the present invention it is possible to secure the cycle to an object by pulling the chain out of the frame and locking the loose end of the chain once the chain has been trained around the object.

In order to facilitate locking, the accessory tube is provided on the front side with a chain lock as part of lock element 11. For this purpose a link of the chain is inserted into an opening 51 of the accessory tube, after which a chain lock pin 43 is placed through this link by operating control catch 47. The lock unit is automatically blocked here at the end of the stroke of catch 47. A variant is alternatively provided wherein the lock unit must be locked by means of a key after movement of catch 47.

In addition to securing of the chain, a pin 42 is also moved forward through a hole in steering pin 45 by means of catch 47. The steering is hereby blocked in effective manner and the cycle cannot be used. It is possible by means of this closing unit 11 to use only the steering lock, or both the steering lock and the chain lock, depending on the desired security. It is likewise possible to arrange both operating means independently of each other so that the chain lock can also be used independently of the steering lock. It is for instance also possible to arrange a separate chain lock unit between the chain guide and the saddle pin.

The operation of the saddle pin clamp 14 is elucidated with reference to Fig. 4. Saddle pin clamp 14 is preferably constructed from a block with a large opening 36 for guiding the saddle pin therethrough and arms 37,38 which protrude therefrom and which are provided on both sides with a bore 43 and 42 for receiving a head of a bolt 39 and a nut 40. The two arms can be urged toward one another by means of the bolt and the nut, whereby the form of opening 36 changes and the saddle pin is clamped in place. The bolt and the nut can be operated through holes 32 in the accessory tube. This construction makes it possible for a protruding seat tube to no longer be necessary on the top side of the accessory tube, whereby using the same frame the saddle can be set lower than in the prior art. The appearance of an accessory tube without protruding saddle tube is also a very attractive design, this being a further advantage of this construction. In a variant the saddle pin clamp is assembled from two halves, wherein a bolt is applied on both sides. This variant has the advantage that it can be manufactured by means of a simpler process. In addition, the moulds for the manufacture are for instance simpler and simpler to apply. This variant is embodied as shown by means of broken lines on the left-hand side of Fig. 4B.

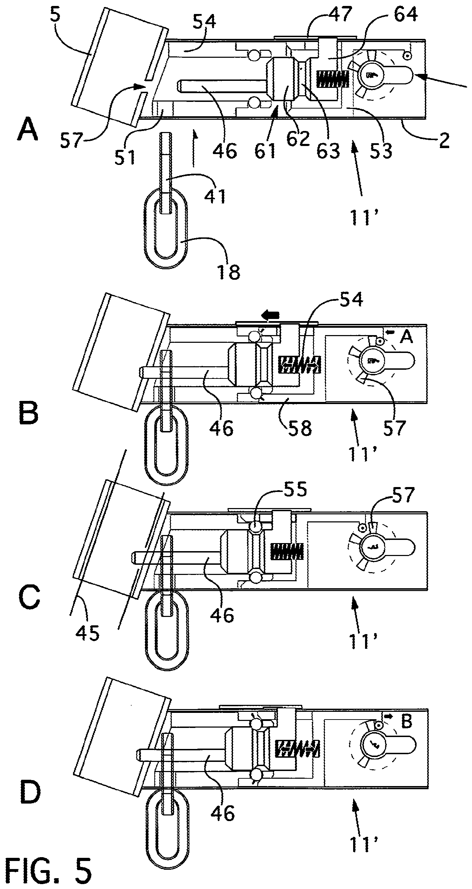

Fig. 5 shows a further preferred embodiment of lock unit 11 which is suitable for placing in accessory tube 2. The lock mechanism serves to block the steering pin and/or to secure a final closing link of 41 of a lock chain 18 by means of an operating element 61. For this purpose lock unit 11 comprises a pin 46 which is suitable for placing through the link as well as for insertion thereof into an opening of respectively the head tube and steering pin. This pin 46 is coupled to a blocking element 62 which, together with a drive element 46, forms a blocking groove 63 which can be blocked by means of a ring of balls 55 and a ball locking member 53.

The drive element is coupled on the outside of tube 2 to a slide or button for operating closure of the lock. The tube has for this purpose an operating slot on the top side. This tube also has an inlet slot 51 for link 41 on the underside. For blocking of the steering pin this latter has an opening 57 through which pin 46 can be inserted.

As can be seen in the respective figures 5A-5D, the substantially annular member 54 is fixedly connected to tube 2. A number of balls 55 can be placed in openings in this annular member, wherein these openings have a larger surface with a surface curvature enabling movement of the balls between a release position and a blocking position for the blocking groove 63. The balls can therefore move inward, see Fig. 5C, and move outward relative to the openings, see Fig. 5B. This takes place under pressure of respectively the blocking element and the ball locking member 53.

The blocking element can be pushed manually between the free position, see Fig. 5A, and the closed position, see Fig. 5C. When the blocking element is displaced from the free position to the closed position, spring 54 is tensioned and the ball locking member pulled along in the direction of arrow A. This latter is preferably stopped here by cylinder tongue 57. The balls are enclosed here by the annular part 58 of the ball locking member.

In order to release the lock mechanism the ball locking member is displaced in the direction of arrow B, see Fig. 5D, by means of rotating the cylinder. Spring 54 is here also tensioned and operating element 61 likewise moves under spring force in the direction of arrow B, whereby the balls are urged outward, this being possible because the ball locking member 53 has been removed by means of the cylinder tongue from the location of the balls.

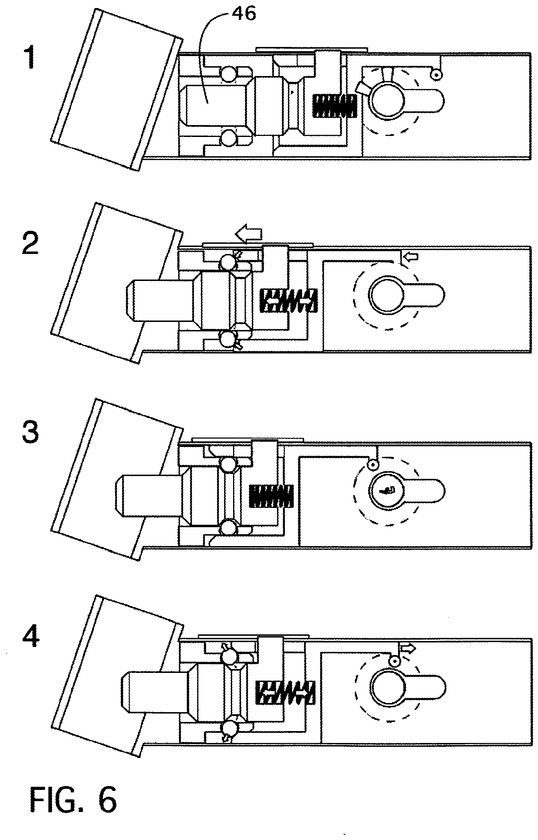

Shown in Fig. 6 in similar manner to Fig. 5 is a simpler variant without the option of blocking a chain.

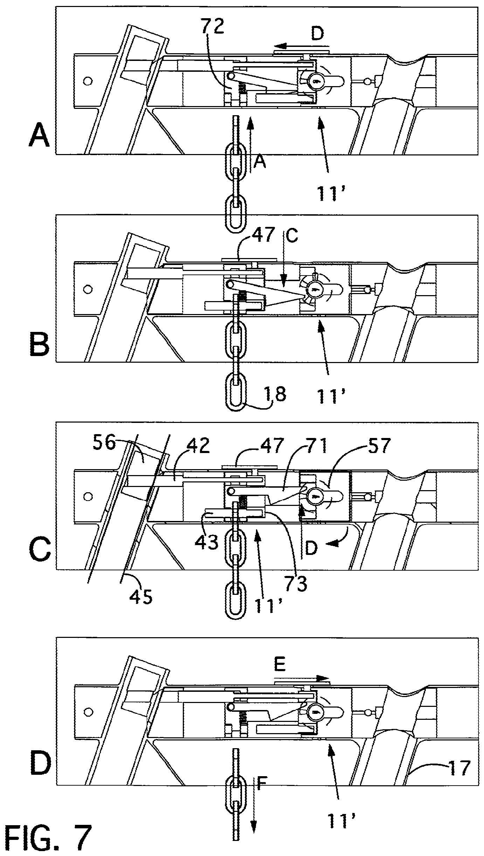

Fig. 7 shows a further alternative embodiment with another lock mechanism on the basis of a pivot arm 71. The pivot arm is mounted tiltably on a pivot arm support 72. The pivot arm also has a closing surface 73 which in the lowered position blocks the lock in the closed position. Opening of the lock takes place by means of rotating the cylinder tongue 57 in the direction of arrow C, see Fig. 7C. The respective pins 42, 43 are coupled to the operating element movable in the direction of arrow D. These pins block respectively the steering pin and chain 18 in substantially the same manner as in the above embodiments.

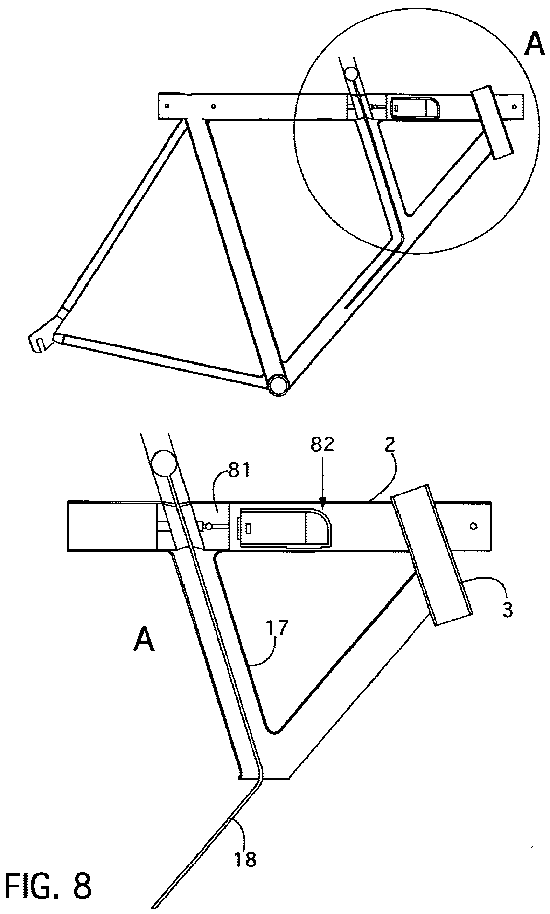

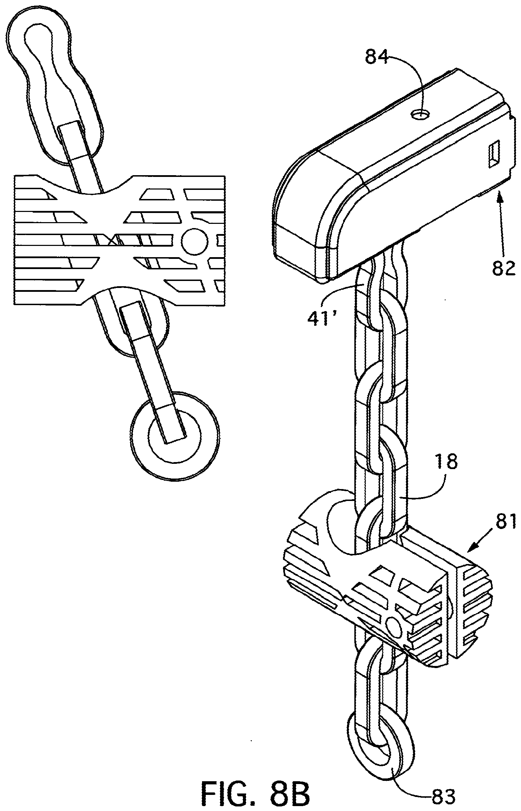

Fig. 8 shows a further embodiment with another variant of a lock mechanism in accessory tube 2. In this variant the final chain link 41' can be inserted into lock mechanism 82 arranged in tube 2. The top side of the tube has an opening for a key in order to reach the key opening 84 of lock element 82. The lock element is also fixed on the underside to the tube by means of tamper-proof bolts.

In this embodiment and in other embodiments the chain has at the outer end arranged in the tube a large end link 83 which cannot pass through a blocking element 81 as otherwise applicable in other embodiments. This element 81 can be formed as part of the inner tube referred to in the foregoing.

It is once again expressly stated here that the following elements can be applied and claimed individually of all other aspects of the present invention. These individually applicable and claimable elements are the use of an accessory tube having a relatively large diameter relative to the other tubes, the application of a saddle pin clamp in an accessory tube, the application of a steering lock in an accessory tube, the application of a chain in an accessory tube, the application of a chain fixing lock in an accessory tube, the application of the lighting in an accessory tube, the application of lighting in the end surface parts of an accessory tube, the application of luggage carriers protruding from the end of an accessory tube, and the application of electronic locks in combination with the lock constructions in the accessory tube.

## Claims

1. Bicycle frame (1), comprising an upper tube 2, a lower tube 3 and a seat tube 4, in addition to a head tube 5, wherein the upper tube extends rearwardly from the head tube, the lower tube extends rearwardly and downwardly from the head tube below the upper tube and the seat tube extends forwardly and downwardly from the upper tube to the lower tube imparting a strong basic construction to the bicycle, further comprising:
- a tube construction (1) comprising the upper tube 2, the lower tube 3 and the seat tube 4, in addition to the head tube 5 providing attachment options for further components of the bicycle, such as a steering pin, a saddle, and attachment options for a rear wheel, and wherein
- the upper tube (2) extends substantially in horizontal direction from substantially the front side of the frame to substantially the rear side of the frame,
- the tube construction comprises an accessory tube (2) adapted for arranging therein at least one sub-system providing the bicycle with additional functionality (11,12,13,14),
- the accessory tube is arranged to allow placing of the at least one subsystem providing the bicycle with additional functionality (11,12,13,14) in the accessory tube wherein the accessory tube comprises an inner tube, wherein at least one subsystem for providing the bicycle with additional functionality ((11,12,13,14) is arranged in the inner tube such that the at least one subsystem in the inner tube is pushed into the accessory tube in one operation.

2. Frame as claimed in claim 1, wherein a power supply source (13) such as an accumulator or battery is arrangeable in the accessory tube.

3. Frame as claimed in claim 1 or 2, comprising a charging port, such as a usb port.

4. Frame according to one or more of the foregoing claims wherein the seat tube (4) is fixed by means of welding to the underside of the accessory tube.

5. Frame as claimed in one or more of the foregoing claims, wherein the front lighting (16) and/or the rear lighting (15) is arranged in the accessory tube, preferably in the respective end surfaces thereof.

6. Frame as claimed in one or more of the foregoing claims, wherein the accessory tube is a substantially thicker tube than other tubes of the frame, and at least one other tube of the frame extends at an angle through the accessory tube.

7. Frame according to one or more of the foregoing claims in which a clamping mechanism (14) is arranged in the accessory tube for the purpose of fixedly clamping a saddle pin, which clamping mechanism preferably comprises a central connecting body with clamping arms protruding from the central connecting body.

8. Frame as claimed in one or more of the foregoing claims, comprising a chain guide tube (17) for guiding a lock chain from the accessory tube to the lower tube, which chain guide tube is preferably in open connection on the inside with the accessory tube and the lower tube.

9. Frame as claimed in one or more of the foregoing claims, wherein the accessory tube is provided with an opening enabling passage of the lock chain (18) therethrough.

10. Frame as claimed in one or more of the foregoing claims, comprising a chain lock mechanism (11) for securing an end of the lock chain.

11. Frame as claimed in one or more of the foregoing claims, comprising an electronic lock.

12. Frame as claimed in one or more of the foregoing claims, wherein the accessory tube extends from the head tube to a position on the seat tube arranged between one third of the underside and the upper side.

13. Bicycle with frame as claimed in one or more of the preceding claims wherein at least one of the sub-systems is provided with energy from a battery that is arranged in the interior of the frame, preferably the accessory tube.

14. Bicycle with frame according to one or more of the preceding claims wherein the accessory tube is substantially thicker than other tubes of the frame and stand at least one other tube of the frame extends at an angle through the accessory tube.

15. Bicycle with frame according to claim 14 wherein the throughfed tube is fixedly welded in a reliable manner.

16. Bicycle with frame as claimed in one or more of the foregoing claims, wherein at least one of the at least one subsystem providing the bicycle with the additional functionality (11,12,13,14) is placed between the seat tube and head tube, preferably with a further at least one of the at least one subsystems arranged about or behind the seat tube.

17. Inner tube for arranging thereof in an accessory tube according to any of the preceding claims for arranging therein subsystems of the bicycle for the purpose of providing the bicycle with additional functionality.

## Patentansprüche

1. Fahrradrahmen (1), der ein oberes Rohr 2, ein unteres Rohr 3 und ein Sitzrohr 4 zusätzlich zu einem Steuerrohr 5 umfasst, wobei sich das obere Rohr von dem Steuerrohr nach hinten erstreckt, sich das untere Rohr von dem Steuerrohr unter dem oberen Rohr nach hinten und nach unten erstreckt, und sich das Sitzrohr von dem oberen Rohr zu dem unteren Rohr nach vorn und nach unten erstreckt, wodurch dem Fahrrad ein starker Grundaufbau verliehen wird, der ferner Folgendes umfasst:
- einen Rohraufbau (1), der das obere Rohr 2, das untere Rohr 3 und das Sitzrohr 4, zusätzlich zu dem Steuerrohr 5 umfasst, die Befestigungsmöglichkeiten für weitere Komponenten des Fahrrads bieten, wie einen Lenkzapfen, einen Sattel und Befestigungsmöglichkeiten für ein Hinterrad, und wobei
- sich das obere Rohr (2) im Wesentlichen in horizontaler Richtung von im Wesentlichen der Vorderseite des Rahmens zu im Wesentlichen der Rückseite des Rahmens erstreckt,
- der Rohraufbau ein Zubehörrohr (2) umfasst, das angepasst ist, um darin mindestens ein Teilsystem einzurichten, das dem Fahrrad zusätzliche Funktionalität (11, 12, 13, 14) verleiht,
- das Zubehörrohr angeordnet ist, um das Platzieren des mindestens einen Teilsystems zu erlauben, das das Fahrrad mit zusätzlicher Funktionalität (11, 12, 13, 14) in dem Zubehörrohr versieht, wobei das Zubehörrohr ein Innenrohr umfasst, wobei mindestens ein Teilsystem zum Versehen des Fahrrads mit zusätzlicher Funktionalität (11, 12, 13, 14) in dem Innenrohr derart eingerichtet ist, dass das mindestens eine Teilsystem in dem Innenrohr in einem Vorgang in das Zubehörrohr geschoben wird.

2. Rahmen nach Anspruch 1, wobei eine Stromversorgungsquelle (13), wie ein Akkumulator oder eine Batterie, in dem Zubehörrohr einrichtbar ist.

3. Rahmen nach Anspruch 1 oder 2, der einen Ladeanschluss, wie einen USB-Anschluss, umfasst.

4. Rahmen nach einem oder mehreren der vorstehenden Ansprüche, wobei das Sitzrohr (4) mittels Schweißen an der Unterseite des Zubehörrohrs befestigt ist.

5. Rahmen nach einem oder mehreren der vorstehenden Ansprüche, wobei die vordere Beleuchtung (16) und/oder die hintere Beleuchtung (15) in dem Zubehörrohr, bevorzugt in dessen jeweiligen Endoberflächen, eingerichtet ist.

6. Rahmen nach einem oder mehreren der vorstehenden Ansprüche, wobei das Zubehörrohr ein wesentlich dickeres Rohr als andere Rohre des Rahmens ist und sich mindestens ein anderes Rohr des Rahmens in einem Winkel durch das Zubehörrohr erstreckt.

7. Rahmen nach einem oder mehreren der vorstehenden Ansprüche, wobei in dem Zubehörrohr ein Klemmmechanismus (14) zum Festklemmen eines Sattelzapfens eingerichtet ist, der bevorzugt einen zentralen Verbindungskörper mit von dem zentralen Verbindungskörper vorragenden Klemmarmen umfasst.

8. Rahmen nach einem oder mehreren der vorstehenden Ansprüche, der ein Kettenführungsrohr (17) zum Führen einer Verriegelungskette von dem Zubehörrohr zu dem unteren Rohr umfasst, wobei das Kettenführungsrohr bevorzugt an der Innenseite mit dem Zubehörrohr und dem unteren Rohr in offener Verbindung steht.

9. Rahmen nach einem oder mehreren der vorstehenden Ansprüche, wobei das Zubehörrohr mit einer Öffnung versehen ist, die den Durchgang der Verriegelungskette (18) dahindurch ermöglicht.

10. Rahmen nach einem oder mehreren der vorstehenden Ansprüche, der einen Kettenverriegelungsmechanismus (11) zum Sichern eines Endes der Verriegelungskette umfasst.

11. Rahmen nach einem oder mehreren der vorstehenden Ansprüche, der ein elektronisches Schloss umfasst.

12. Rahmen nach einem oder mehreren der vorstehenden Ansprüche, wobei sich das Zubehörrohr von dem Steuerrohr zu einer Position auf dem Sitzrohr erstreckt, die zwischen einem Drittel der Unterseite und der Oberseite eingerichtet ist.

13. Fahrrad mit Rahmen nach einem der vorstehenden Ansprüche, wobei mindestens eines der Teilsysteme mit Energie aus einer Batterie versorgt wird, die im Inneren des Rahmens, bevorzugt des Zubehörrohrs, eingerichtet ist.

14. Fahrrad mit Rahmen nach einem oder mehreren der vorstehenden Ansprüche, wobei das Zubehörrohr wesentlich dicker ist als andere Rohre des Rahmens und Ständers und sich mindestens ein anderes Rohr des Rahmens in einem Winkel durch das Zubehörrohr erstreckt.

15. Fahrrad mit Rahmen nach Anspruch 14, wobei das durchgeschobene Rohr zuverlässig fest verschweißt ist.

16. Fahrrad mit Rahmen nach einem oder mehreren der vorstehenden Ansprüche, wobei mindestens eines des mindestens einen Teilsystems, das das Fahrrad mit der zusätzlichen Funktionalität (11, 12, 13, 14) versieht, zwischen dem Sitzrohr und dem Steuerrohr platziert ist, bevorzugt mit einem weiteren mindestens einen des mindestens einen Teilsystems, das um oder hinter dem Sitzrohr eingerichtet ist.

17. Innenrohr zum Einrichten desselben in einem Zubehörrohr nach einem der vorstehenden Ansprüche, um darin Teilsysteme des Fahrrads zu dem Zweck einzurichten, dem Fahrrad zusätzliche Funktionalität zu verleihen.

## Revendications

1. Cadre de bicyclette (1), comprenant un tube supérieur 2, un tube inférieur 3 et un tube de selle 4, en plus d'un tube de tête 5, dans lequel le tube supérieur s'étend vers l'arrière à partir du tube de tête, le tube inférieur s'étend vers l'arrière et vers le bas à partir du tube de tête en dessous du tube supérieur et le tube de selle s'étend vers l'avant et vers le bas à partir du tube supérieur vers le tube inférieur conférant une construction de base solide à la bicyclette, comprenant en outre :
- une construction tubulaire (1) comprenant le tube supérieur 2, le tube inférieur 3 et le tube de selle 4, en plus du tube de tête 5 offrant des options de fixation pour d'autres composants de la bicyclette, telles qu'un axe de direction, une selle et des options de fixation pour une roue arrière, et dans lequel
- le tube supérieur (2) s'étend sensiblement dans la direction horizontale à partir sensiblement du côté avant du cadre jusqu'à sensiblement le côté arrière du cadre,
- la construction tubulaire comprend un tube accessoire (2) adapté pour y agencer au moins un sous-système apportant à la bicyclette une fonctionnalité supplémentaire (11,12,13,14),
- le tube accessoire est agencé pour permettre le placement de l'au moins un sous-système apportant à la bicyclette une fonctionnalité supplémentaire (11, 12, 13, 14) dans le tube accessoire, dans lequel le tube accessoire comprend un tube intérieur, dans lequel au moins un sous-système pour apporter à la bicyclette une fonctionnalité supplémentaire (11, 12, 13, 14) est agencé dans le tube intérieur de sorte que l'au moins un sous-système dans le tube intérieur soit poussé dans le tube accessoire en une seule opération.

2. Cadre selon la revendication 1, dans lequel une source d'alimentation électrique (13) telle qu'un accumulateur ou une batterie peut être agencée dans le tube accessoire.

3. Cadre selon la revendication 1 ou 2, comprenant un port de charge, tel qu'un port USB.

4. Cadre selon une ou plusieurs des revendications précédentes, dans lequel le tube de selle (4) est fixé au moyen d'une soudure à la face inférieure du tube accessoire.

5. Cadre selon une ou plusieurs des revendications précédentes, dans lequel l'éclairage avant (16) et/ou l'éclairage arrière (15) est agencé dans le tube accessoire, de préférence dans les surfaces d'extrémité respectives de celui-ci.

6. Cadre selon une ou plusieurs des revendications précédentes, dans lequel le tube accessoire est un tube sensiblement plus épais que les autres tubes du cadre, et au moins un autre tube du cadre s'étend selon un angle à travers le tube accessoire.

7. Cadre selon une ou plusieurs des revendications précédentes, dans lequel un mécanisme de serrage (14) est agencé dans le tube accessoire dans le but de serrer de manière fixe un axe de selle, un mécanisme de serrage qui comprend de préférence un corps de connexion central avec des bras de serrage faisant saillie du corps de connexion central.

8. Cadre selon une ou plusieurs des revendications précédentes, comprenant un tube de guidage de chaîne (17) pour guider une chaîne de verrouillage à partir du tube accessoire au tube inférieur, un tube de guidage de chaîne qui est de préférence en connexion ouverte sur la partie interne avec le tube accessoire et le tube inférieur.

9. Cadre selon une ou plusieurs des revendications précédentes, dans lequel le tube accessoire est pourvu d'une ouverture permettant le passage de la chaîne de verrouillage (18) à travers celle-ci.

10. Cadre selon une ou plusieurs des revendications précédentes, comprenant un mécanisme de verrouillage de chaîne (11) pour sécuriser une extrémité de la chaîne de verrouillage.

11. Cadre selon une ou plusieurs des revendications précédentes, comprenant une serrure électronique.

12. Cadre selon une ou plusieurs des revendications précédentes, dans lequel le tube accessoire s'étend à partir du tube de tête à une position sur le tube de selle agencée entre un tiers du côté inférieur et le côté supérieur.

13. Bicyclette avec cadre selon une ou plusieurs des revendications précédentes, dans laquelle au moins l'un des sous-systèmes est alimenté en énergie à partir d'une batterie qui est agencée à l'intérieur du cadre, de préférence le tube accessoire.

14. Bicyclette avec cadre selon une ou plusieurs des revendications précédentes, dans lequel le tube accessoire est sensiblement plus épais que les autres tubes du cadre et repose contre au moins un autre tube du cadre qui s'étend selon un angle à travers le tube accessoire.

15. Bicyclette avec cadre selon la revendication 14, dans laquelle le tube inséré est soudé de manière fixe et fiable.

16. Bicyclette avec cadre selon une ou plusieurs des revendications précédentes, dans laquelle au moins un de l'au moins un des sous-systèmes apportant à la bicyclette la fonctionnalité supplémentaire (11, 12, 13, 14) est placé entre le tube de selle et le tube de tête, de préférence avec un autre au moins un de l'au moins un des sous-systèmes agencés autour ou derrière le tube de selle.

17. Tube intérieur pour l'agencement de ce dernier dans un tube accessoire selon l'une quelconque des revendications précédentes pour y agencer des sous-systèmes de la bicyclette dans le but d'apporter à la bicyclette une fonctionnalité supplémentaire.
